# EUROPEAN PATENT SPECIFICATION

(11) **EP 2 732 588 B1**
(45) Date of publication and mention of the grant of the patent: **26.10.2016**
(21) Application number: 11733684.2
(22) Date of filing: 15.07.2011
(51) Int. Cl.: H04L 12/70

(54) **POLICY TOKENS IN COMMUNICATION NETWORKS**
RICHTLINIEN-TOKENS IN KOMMUNIKATIONSNETZEN
JETONS POUR ENSEMBLE DE RÈGLES DE GESTION DANS DES RÉSEAUX DE COMMUNICATION

(43) Date of publication of application: 21.05.2014
(73) Proprietor: Telefonaktiebolaget LM Ericsson (publ), 164 83 Stockholm (SE)
(72) Inventor: STALLARD, Paul, Chichester Hampshire P019 3DE (GB); LUDWIG, Reiner, 52393 Hürtgenwald (DE)
(74) Representative: Ericsson
(86) International application number: PCT/EP2011/062135
(87) International publication number: WO 2013/010567

(56) References cited:
- EP-A2- 1 332 627
- WO-A1-2010/066295
- "3rd Generation Partnership Project; Technical Specification Group Services and System Aspects; Policy and charging control architecture (Release 11)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V11.1.0, 17 March 2011 (2011-03-17), pages 1-136, XP050476336, [retrieved on 2011-03-17]

## Description

### [Technical field]

The present invention relates to a network entity, a processing entity and to methods of operating the same. The present invention further relates to a computer program loadable into a processing unit and a computer program product comprising such computer program. More specifically, the present invention relates to generating and/or receiving a policy token for applying a specific policy to a packet flow in a network.

### [Background]

Communication networks, such as the internet, local and wide area (private) networks, and cellular telecommunication networks have in recent years seen a surge in the number of data services provided as well as in the amount of data handled. Common communication networks employ a so-called packet topology for data transport in which the data to be transmitted is divided into packets, which - in turn - travel from the source to the destination via one or more routes in the network. In just the same way as the data is divided into packets prior to transmission, the received packets are recompiled at the destination side so as to form consistent data representing the data to be transmitted. The network, the involved infrastructure, and user equipment provide mechanisms for packet routing, determining lost packets, resending of lost packets, error correction, packet recompilation and the like. Besides the resending of packets, also dropping of packets can be considered if losing one or more packets at the destination side proves acceptable.

With the advent of transporting media content (e.g. voice, music, video, etc.) over packet based networks, the concept of media streams became ubiquitous. A media stream in a packet-based network is a flow of packets that carry encoded pieces of media data that originate from a source and are bound to one or more destinations. Once arrived at the destination, the packets are recompiled in their respective chronological order so as to provide a consistent data stream for reproducing the media content, i.e. a voice, music or a video. While the correct and consistent arrangement of the incoming packets is usually not a problem, loss of packets may become critical: Since streams may be real-time, there is usually no way of resending packets because the resent packets would arrive at the destination too late. Low bandwidth may cause the same problem. Further, when the number of lost or slow packets increases, the reproduced media may be adversely affected.

Thus, for example, a voice may become incomprehensible and/or the fidelity of music and video may become unacceptably low. A particular stream may be identified by the IP address and/or port number of the sender/receiver and/or a content reference. Even if, for example, for on-demand streaming it is possible to stall the receiver and wait for lost packets to be retransmitted or for delayed packets to arrive, this may, nevertheless, force clients to stop to wait for "rebuffering". As a consequence, there may also be resultant a reduced user experience.

Most of today's media/broadband services are provided on a "best effort" basis. While networks will endeavour to deliver traffic in a reliable and consistent manner, there is no guarantee that this will actually occur. To date, this has proved acceptable for the majority of internet video services etc., many of which are provided free of charge to the end users. However, as more valuable content is made available through these services and customers are being asked to pay for access to the content, subscribers will expect these services to be delivered in a reliable manner. Quality of service (QoS) mechanisms can be deployed to deliver this guarantee, i.e. to provide the users (subscribers) with some well-defined level of quality for receiving voice, music, videos etc. with high fidelity. Mechanisms for signalling QoS requests and enforcing Quality of Service within networks are well known in the field today, including the so-called Resource reSerVation Protocol (RSVP).

Existing QoS solutions rely on integration between the content provider (the entity granting access to a piece of content) and the delivery network. For any given network the number of QoS integrations scales with the number of content providers, and for a content provider the number of integrations scales with the number of addressed networks. Amongst others, in scenarios where the end user may reside on one of a number of access networks, existing solutions require that the network elements granting the QoS policy can communicate that correctly to the final access network. This may require network integration and for the granting entity to either inform all networks of a policy decision or to have knowledge about which access network will eventually deliver the service. Hence, there is a need for an improved way of applying policies, such as providing a specific QoS level, for selected packet flows to selected and specific users.

Document WO 02/37870 A2 discloses a mechanism for coordinating charging for a multimedia session between a mobile terminal and a remote host. The multimedia session is established over a radio access network via a packet-switched access network coupled to a multimedia system. Therein, a token associated with the multimedia session is generated and used to correlate session charges for operations performed in the packet-switched access network and for operations performed in the multimedia system.

Document WO 2010/066295 A1 relates to token-based correlation of control sessions for policy and charging control of a data session through a NAT. Therein, a token is allocated to an IP session that uniquely identifies the session and provided to a policy server and an access gateway. The access gateway then sends the token to a deep packet inspection node via an network address translator, and the deep packet inspection node sends it to the policy server. Finally, the policy server uses the token to associate first and second service control sessions.

### [Summary]

The object of the present invention is to provide an improved way of applying policies, such as a provision of a specific QoS level, for packet flows to user equipment. In particular, it is an object of the present invention to provide a way of generating and receiving a policy token for applying a specific policy for packet flow to selected user equipment. Correspondingly, it is an object of the present invention to provide an improved network entity, an improved processing entity, improved methods of operating the same, an improved computer program loadable into a processing unit and a respective computer program product.

The above objects are met by the subject-matter of the independent claims. Further preferred embodiments are defined in the dependent claims.

According to an embodiment of the present invention, there is provided a network entity comprising a processing unit that is configured to receive a policy token from user equipment, wherein the policy token specifies a specific quality of service for the packet flow to the user equipment; to determine network equipment handling a packet flow to the user equipment; to generate an instruction to apply a specific policy for the packet flow to the user equipment based on the received policy token, wherein the instruction is generated to provide the specific quality of service; and to send the instruction to the network equipment.

According to another embodiment of the present invention, there is provided a system comprising the above network entity and a processing entity comprising a processing unit that is configured to generate a policy token for being sent to and forwarded by user equipment, the policy token invoking network equipment handling a packet flow to the user equipment to apply a specific policy for the packet flow to the user equipment.

According to another embodiment of the present invention, there is provided a method of operating a network entity including the steps of receiving a policy token from user equipment, wherein the policy token specifies a specific quality of service for the packet flow to the user equipment; determining network equipment handling a packet flow to the user equipment; generating an instruction to apply a specific policy for the packet flow to the user equipment based on the received policy token, wherein the instruction is generated to provide the specific quality of service; and sending the instruction to the network equipment.

According to another embodiment of the present invention, there is provided a method for policy control, comprising the steps of generating, by a processing entity, a policy token for being sent to and forwarded by user equipment, the policy token invoking network equipment handling a packet flow to the user equipment to apply a specific policy for the packet flow to the user equipment, and receiving, by a network entity, the policy token from user equipment, wherein the policy token specifies a specific quality of service for the packet flow to the user equipment. The method further comprises the steps of determining, by the network entity, network equipment handling a packet flow to the user equipment, generating, by the network entity, an instruction to apply a specific policy for the packet flow to the user equipment based on the received policy token, wherein the instruction is generated to provide the specific quality of service and sending, by the network entity, the instruction to the network equipment.

According to yet further embodiments of the present invention, there is provided a computer program loadable into a processing unit comprising code for executing the method according to respective embodiments of the present invention, and a corresponding computer program product comprising this computer program.

### [Brief description of the drawings]

Embodiments of the present invention, which are presented for better understanding the inventive concepts but which are not to be seen as limiting the invention, will now be described with reference to the Figures, in which:
- Figure 1: shows a schematic representation of a conventional content delivery/distribution network;
- Figure 2: shows a schematic representation of a content delivery/distribution network employing a policy token according to an embodiment of the present invention;
- Figure 3: shows a schematic representation of a content delivery/distribution network employing a policy token according to another embodiment of the present invention;
- Figure 4: shows a flowchart of a method embodiment of the present invention;
- Figure 5A: shows a schematic representation of a network entity according to another embodiment of the present invention; and
- Figure 5B: shows a schematic representation of a processing entity according to yet another embodiment of the present invention.

### [Detailed description]

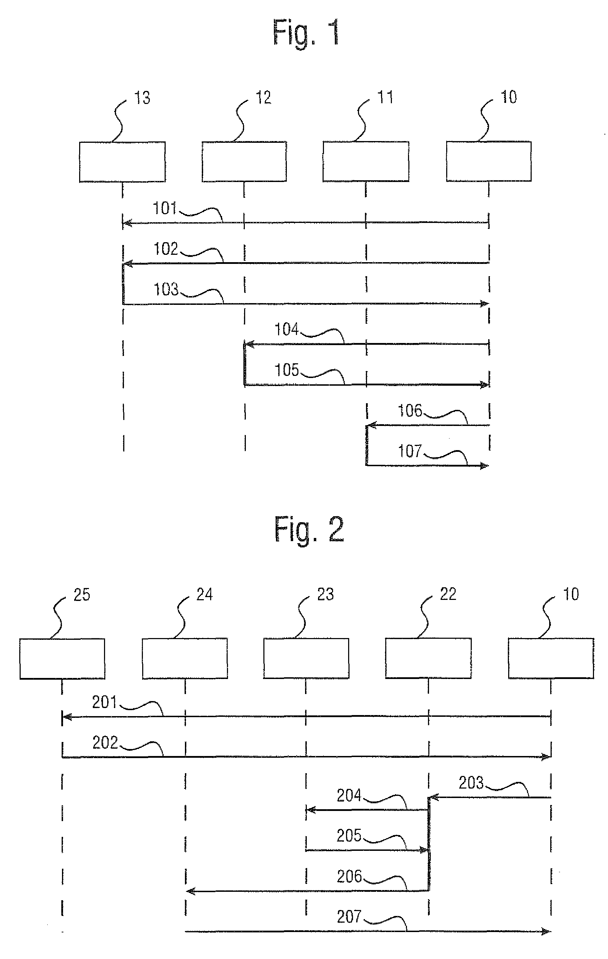

With reference to Fig. 1, a conventional concept for service delivery is described. The services are delivered using Content Delivery (or: Distribution) Networks (CDNs), e.g. the CDN catalogue node 12 and the CDN delivery node 11. Rather than deploying a server infrastructure capable of delivering the content to their subscribers, content providers may use commercial CDN services (such as those provided by Akamai, Limelight, and many others). The content providers, i.e. web site owners, broadcasters, aggregators, etc., typically create a portal 13 in the form of a web site that provides the content catalogue and allows users to select assets (content) to view or purchase via user equipment or a client 10 (either free or paid).

The users 10 browse in stage 101 a catalogue and request in stage 102 a desired asset. In stage 103 the Uniform Resource Identifier (URI) is confirmed to the client 10. In stage 104 the client 10 sends a get URI request and receives in stage 105 a corresponding http redirection response. Thus, the content is uploaded to the CDNs and users are redirected to the CDN 11 when they choose to view/download a chosen asset in stages 106/107.

The CDN is usually a hierarchy of servers 11, 12, with servers possibly geographically distributed and some servers "nearer" (lower cost - money, latency, etc) to specific groups of subscribers. When a user requests content via the catalogue node 12 from the CDN, the CDN will in turn direct the user to the most efficient delivery node 11 from where the content will be delivered. This redirection may be based on http or other protocol redirection, DNS, or various other techniques. In the majority of cases, CDNs do not offer any guaranteed level of QoS. They tend to improve QoS on average because of the local caching of content, but nothing is guaranteed or negotiated with the network.

According to embodiments of the present invention, a so-called policy token is introduced. This policy token can be a generic token that is issued by the content provider and returned to the end user as part of the purchase or session establishment process. The policy token can be redeemed by the user/subscriber (or more precisely by means of their client device/terminal, user equipment, etc.) submitting that token to the network when signalling to retrieve the content.

Alternatively, the policy token can be redeemed by the operator by intercepting the policy token from the user plane traffic. This concept is thus transparent to users, and would not require any specific signalling (e.g., for the policy token) between user equipment and the network. Networks supporting policy tokens will enforce the QoS policy that the end users are entitled to from their purchase. In general, the use of policy tokens is transparent for most of the involved network elements including also the user equipment. There may be thus the advantage that no modifications are needed to, say the user equipment, for implementing the concepts of policy tokens.

In general, the QoS on a network connection can be affected by a number of factors. These include data rate (bandwidth), packet loss (where a packet never arrives at the destination), packet errors (where packets are delivered, but with errors), latency (the time it takes for a packet to travel from source to destination), jitter (the variance of latency) and out of order delivery.

Further, services and applications are more or less sensitive to these factors. Web browsing, for example, runs over TCP, which is a reliable transport protocol, since TCP will automatically account for out of order packets, packet loss/errors, etc. TCP will continue to work in the presence of all these factors, but the user experience will deteriorate as the effective bandwidth is reduced, since either because the bandwidth is actually low, or because the error rate is high and therefore the client has to wait for a lot of retransmissions. Video on the other hand is often delivered over RTP/UDP. This transport stack cannot correct for packet loss and typically will not handle out of order delivery. If the bandwidth is insufficient the user experience may deteriorate. Similarly, although video is not sensitive to network latency, it may be sensitive to jitter, which can cause a video decoder on user equipment to stall. The above goes to show that QoS means different things to different services and applications. When an application requests QoS from a network, it will be asking for guarantees on those factors to which it is sensitive.

Broadly speaking, networks implement QoS in one of two ways: One model is known as "Integrated Services". In this model, applications use, for example, RSVP to request and reserve resources through a network. The request flows through the network, reserving resources in each network element along the path. A reservation request will return with a confirmation that the route has been established, or an error stating that the requested resources were not available, or possibly a set of parameters (lower than those requested) that were able to be guaranteed. Integrated Services may provide the advantage of being able to specify QoS per flow and with fine granularity, but may have the disadvantage that network elements are required to accept, maintain, and tear down a large number of reservations. In the context of "Integrated Services", the network equipment handling the packet flow to the user equipment may be identified as at least a part of the network elements along the path. The instruction to apply a specific policy for the packet flow to the user equipment may be sent to these involved elements, for example, by using RSVP.

The alternative method is known as "Differentiated Services". In this model, network traffic is divided into multiple classes depending on its QoS requirements. Each packet is marked according to the type of service they need. In response to these markings, routers and switches may use various queuing strategies to tailor performance to the requirements. This may remove the need for individual flows to be known to each network element, at the expense of a coarser level of control. The packet marking may be performed in the client or server, or by a network element as the flow enters the network. In the context of "Differentiated Services", the network equipment handling the packet flow to the user equipment may include the entity that performs said marking. The instruction may thus be sent to these involved elements, for example, as an instruction to apply a respective marking to packets of a specific flow. In general, however, i.e. for all scenarios including said differentiated and integrated services, the network equipment may also include a higher level management system that does not form a direct part of the network handling the data.

In line with further embodiments of the present invention, the policy token enables a separation of the policy enforcement from the policy purchase process. This may significantly reduce the network integration requirements for the content providers and allows operators to provide flexible methods of delivering those fulfilling the QoS guarantees. In a more specific embodiment, the policy token can be an encoded data object, so that the redeeming entity (the network for example) can determine the supplier/issuer of the token (the content provider for example) and ensure it is valid and applicable to the redeemer (the client device). Then the issuing portal or web page from the content provider or associated entities can decide on charging, QoS level, etc. by generating and/or issuing a respective policy token.

In the following, a possible use of a policy token and the token itself is described in conjunction with Figure 2 that shows a schematic representation of a content delivery/distribution network employing a policy token according to an embodiment of the present invention. The depicted exemplary network configuration comprises the following infrastructure components and elements: A content provider server 25, a content server 24, a network 23, a deep packet inspection (DPI) entity 22, and user equipment 10, such as the client device.

In general, the client device 10 (user equipment) can be in the form of mobile phones, hand-held mobile devices, Personal Digital Assistants (PDA), and the like. They can be, however, also vehicle mounted devices, such as vehicle mounted mobile phones. Further the client device may comprise modules and/or components according to and/or complying with the Global System of Mobile Communications (GSM), General Packet Radio Service (GPRS), Enhanced Data Rates for GSM Evolution (EDGE), Universal Mobile Telecommunications System (UMTS), High Speed Packet Access (HSPA), 3GPP Long Term Evolution (LTE), Cell-ID transmission, Multimedia Broadcast Multicast Service (MBMS), Location Based Services (LBS).

At first, a content provider may receive policy tokens from a separate token provider or be given a means of generating policy tokens by himself. For example, the token provider, or in the latter case the content provider himself, buys from the network service provider rights to issue a number of policy tokens, being possibly equivalent to some amount of data for which the network service provider guarantees some given level of QoS. Each policy token may specify the QoS that should be provided for a session for accessing a given content object (music, video, etc.). This may include a guaranteed bandwidth, a guaranteed maximum latency etc. However, also other QoS parameters can be added to the policy token mechanism without changing the fundamental concept.

Policy tokens may be instantiated with information at the point they are issued, e.g. they may comprise user information, time information, expiry information, content information, content URI, etc. Thus, the policy token may also serve to identify a content/stream, and if the pricing for different streams is different then the content reference from the policy token may serve to identify which stream the policy is to be applied to. As a consequence, sender and receiver of several contents may be identical, and a differentiation amongst several contents may still be possible.

Policy tokens can further be signed by the token issuer in order to validate/authenticate the token and allow the redeeming entity (the network) to determine the issuer and to determine authenticity of the policy token at a later point in time. Policy tokens can further be encoded in such a way that it is not possible for the client device 10 or users to create fake tokens and obtain QoS guarantees to which they are not entitled. This may involve encrypting the policy token by applicable methods and concepts as known per se in the related arts. It is further possible to append the policy token to a content URI in order that it can be conveyed using standard mechanisms. However, also other means - as they are known per se in the arts - of delivering policy tokens are possible.

In general, an authenticated or valid policy token should be understood as that the provider identity is confirmed, that the token is a valid token provided by a certified provider, that the identified receiver is the actual receiver, and combinations thereof. The redeeming network may want to identify and authenticate the issuing content provider, as well as authenticate that the policy token itself is valid (e.g. that it was genuinely created by the network operator in the first place). It may also be of use to determine whether the user equipment has interfered with the policy token, so as to discover counterfeit or resubmitted tokens. For identifying a resubmitted token, for example, a policy token serial number comprised by the token may be employed.

Now with reference to Figure 2 an exemplary scenario is described: The client device 10 selects in stage 201 a specific content (asset) from the content provider server 25. This may be effected by a web site provided by server 25 that allows a selection of content, e.g. via an interactive catalogue. The server 25 may authenticate the user of the client device 10 so as to be a legitimate subscriber to the services provided or may handle a dedicated purchase process for providing the user with one or more policy tokens. The content provider server 25 returns in stage 202 an URI together with one or more policy tokens. The URI specifies the location of the (purchased) content.

Subsequently or at a later point in time, the user decides to actually retrieve the content, so that the client device 10 sends in stage 203 the URI together with the one or more policy tokens to the network 23 via the DPI entity 22. This may imply a conscious decision by the user, or may well be also an automatic response by the client to receiving the URI. For example, a possible scenario includes that the user consciously chooses the content and authorizes a payment, but then all other steps would be automatic and the content would appear on their screen.

The DPI entity 22 identifies the policy tokens from the traffic from and to the client device 10 in the network 23. The DPI entity 22, being an embodiment of the so-called network entity of other embodiments of the present invention, identifies the one or more policy tokens and initiates consumption thereof: In stage 204 the DPI entity 22 requests from network 23 a specific QoS for the following data stream delivering the content to the client device 10. This may be effected via the above-mentioned RSVP. Once the network 23 has the corresponding resources available and reserved it responds with an acknowledgement 205. In case the required resources are not available at the time, an error message may return or the user may be offered to accept a lower level of QoS.

It may only be then that the DPI entity 22 forwards the URI to the content server 24 in stage 206. In the following, the content is delivered to the client device 10 from the content server 24 via the network 23 with the negotiated QoS in line with the previously received policy token(s).

More generally, the network will intercept the policy token(s) as the URI is routed to the content repository (e.g. content server 24). This may employ, as shown in the above example, Deep Packet Inspection technology. However, also a network entity being not involved with and/or employing DPI may effect the above interception and processing of the policy token(s). When the network has intercepted the policy token(s), it may authenticate the token (ensure it has a valid signature and value arguments for example) and then make sure that the involved infrastructure apply the QoS policy. The content request will continue to the content repository and be delivered according to the requested QoS policy.

In the above, the client device 10 will typically be unaware of the policy token(s) as it will be part of the content URI. The policy token(s) may be simply passed to the network when the client device 10 submits the request for the URI

In the shown example, a user selects some content from a webpage/portal etc. The portal authenticates the user, bills the user, etc. and where appropriate determines the QoS level that the user is entitled to or has purchased. The portal returns a URI, from which the user can access the content. The policy token would be generated by the portal and appended (transparently to the client) to the URI. When the client accesses the content, some entity in the network will recognise the policy token and assert the correct quality of service level for the delivery of the chosen asset.

There are several models that may be implemented using the policy token. One possible model would be that the network operator identifies the content provider from the (resolved/consumed) policy token(s) and charges the content provider for delivering the QoS. The policy token may thus provide a certified and secured identity of the party to be charged (provider of the stream) and may further comprise details or a reference to indicate the provider where the user or provider is charged for the consumed services and usage of network resources. This can be done, for example, by collecting received and "consumed" policy tokens, possibly also prepaid. This may involve in conventional telecommunication networks so-called charging data records produced by the policy enforcing entity. The content provider may in turn charge the end user for the improved QoS, or recover the cost through advertising revenues etc. Further still, consumed policy tokens may initiate a charging of the user directly, without involving the content provider. Further, "consumed" policy tokens can be registered by means of a policy token serial number, so that a serial number received more than once can point to a counterfeit/resubmitted token. Also, the content provider may purchase a bunch of prepaid policy tokens, say, a bunch of tokens with a specific number or range of policy token serial numbers.

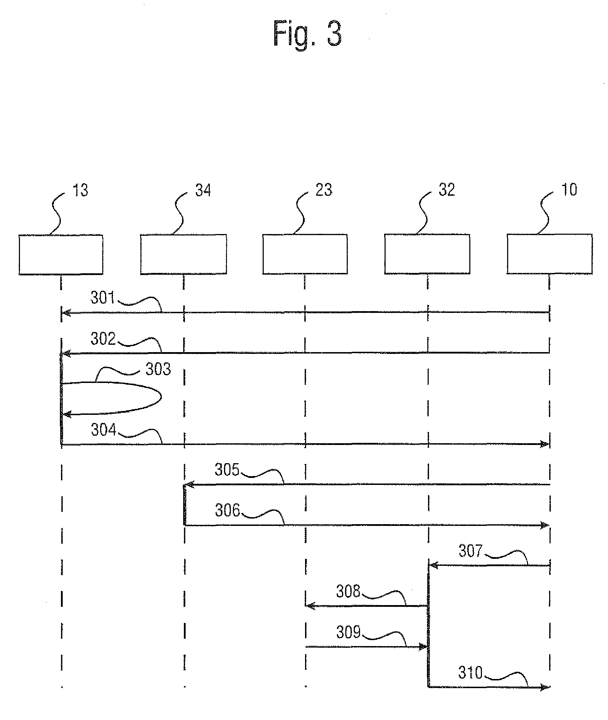

In the following, another possible use of a policy token and the token itself is described in conjunction with Figure 3 that shows a schematic representation of a content delivery/distribution network employing a policy token according to an embodiment of the present invention. The depicted exemplary network configuration comprises the following infrastructure components and elements: A portal 13, a CDN catalogue node 34, a network 23, a CDN distribution/delivery node 32, and user equipment 10, such as the before-mentioned client device.

The user may in stage 301 browse the catalogue of available assets from his/her client device 10 on the portal 13. The user may then decide to purchase/select one or more asset(s) and correspondingly send a purchase/play asset request 302 to the portal 13. In this embodiment, the portal 13 generates one or more policy tokens in stage 303, so as to forward the token(s) together with the URI to the client device 10 in stage 304. The URI initially points to the CDN catalogue node 34, which, upon request 305, redirects the user to the delivery/distribution node 32 in stage 306.

Actual asset retrieval is initiated by sending the redirected request 307 to the CDN delivery/distribution node 32. In this embodiment, it is the CDN delivery/distribution node 32 that resolves the received policy token(s) and negotiates the required resources with network 23 in stage 308. If resources are available and/or have been successfully reserved, the network 23 sends a corresponding acknowledgement 309 to the CDN delivery/distribution node 32. Delivery 310 of the asset to the client device 10 may then initiate and continue with the negotiated QoS by the network 23.

In this embodiment, the policy token(s) are redeemed by the delivery CDN. In this case, the CDN would be integrated with the QoS network mechanisms, but the content provider would not require any specific knowledge of the network QoS. If the policy token(s) are carried in the content URI it can be transparently carried through any redirection process required by the CDN (whether that be based on DNS, http redirection or other similar mechanism). The policy token may be redeemed in the final delivery node of the CDN which may then negotiate the QoS policy with the local delivery network.

According to further embodiments of the present invention, the concept of policy tokens finds application in a so-called federated CDN environment. CDN federation is a concept where independent CDNs can be joined together to provide wider coverage. A typical example would be for two operators to federate their CDNs to allow content to be delivered to users in either network. Federations may involve a plurality of network operators. Further, in a federated CDN, a content provider would typically have a commercial arrangement with one specific CDN. Policy tokens would allow policy decisions to be propagated through the federation to the final delivery CDN node transparently. The delivery CDN would charge the cost of the QoS enforcement to the parent CDN using the commercial mechanisms available within the federation arrangement. This charge would in turn be passed on to the content provider.

In other words, the (con)federate distribution is an example where the entity receiving the request is not the one that sends the content stream. The provider may probably know which entity/server will actually provide the stream and may thus adapt the policy token accordingly. The request from the client device may then not necessarily be sent to the same entity as the one actually providing the stream. The policy token itself may provide this information for the content providing network. The final delivery node may be thus a local surrogate of the original content provider as being the normal case with a CDN. In a standardized version of policy tokens, it may be possible for the content portal to issue a policy token with no specific knowledge of the final delivery system. This may involve an agreement between content provider and those systems that will eventually deliver the content.

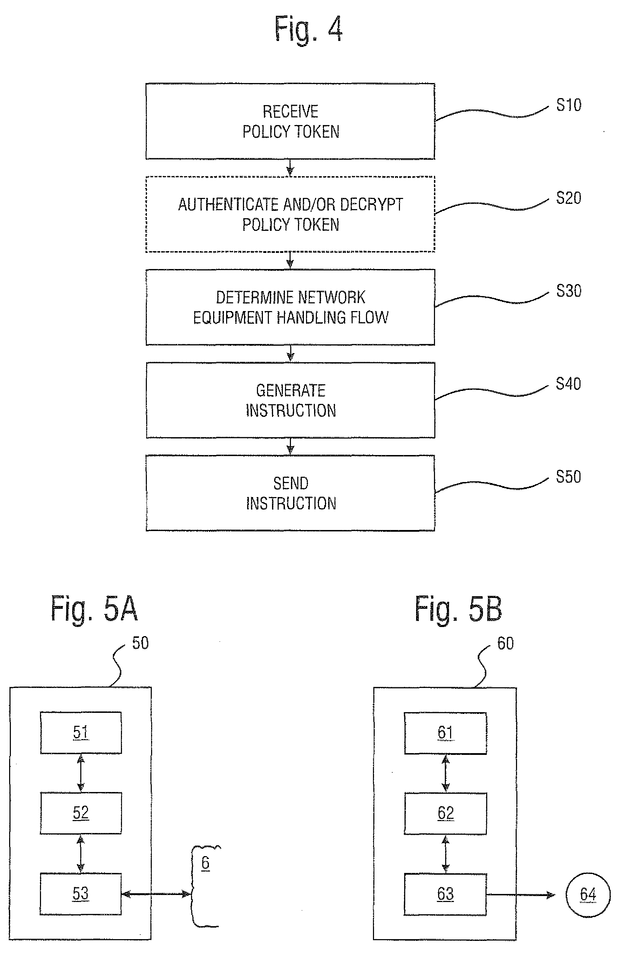

Figure 4 shows a flowchart of a method embodiment of the present invention. The method may be for operating a network entity as will be described below in conjunction with Figure 5A. The method includes the step S10 of receiving a policy token from user equipment, the step S30 of determining network equipment handling a packet flow to the user equipment, the step S40 of generating an instruction to apply a specific policy for the packet flow to the user equipment based on the received policy token, and the step S50 of sending the instruction to the network equipment. Optionally, the method includes the step S20 of authenticating and/or decrypting the policy token so as to determine its validity.

For performing the above steps and as shown in Figure 5A, the network entity 50 may comprise a processing unit 52, a memory unit 51 coupled to the processing unit 52, and a communication unit 53 adapted to receive the policy token and to send via a network 6 the instruction to apply a specific policy to the involved network elements. In the memory unit 51 there may be stored a computer program loadable into the processing unit 52 comprising code for executing the steps of the described method. This method may be adapted to another disclosed embodiment.

Figure 5B shows a schematic representation of a processing entity according to yet another embodiment of the present invention. The processing entity 60 may comprise a processing unit 62, a memory unit 61 coupled to the processing unit 62, and a communication unit 63. The memory unit 61 may comprise code to instruct the processing unit 62 to generate a policy token 64 for being sent to and forwarded by user equipment, the policy token 64 invoking network equipment handling a packet flow to the user equipment to apply a specific policy for the packet flow to the user equipment. The policy token 64 may be output via the communication unit 63 as a data object as described above to any other entity/element handling the token 64. In this way, the processing entity 60 may form together with the network entity a system for generating and receiving the policy token 64. The system may form part of or may be coupled to a communication network.

Embodiments of the present invention may provide one or more of the following advantages: The need may be removed to integrate all the content portals with the network QoS if a pre-agreed set of policies and a standard mechanism for generating the tokens are available. It may be further allowed for the policies to be granted where they should be located, i.e. in the content portal that understands the terms under which the user has access to the content, and enforced where they should be located, i.e. in the network, without requiring a direct integration of the two. Yet further, it may be allowed for the portal to issue a token that could be honored/accepted by a number of CDNs - allowing QoS across federated CDNs and to allow the policy decision to be carried by standard mechanisms (the URL/URI) all the way to the final edge node that will deliver the content - which the policy is likely to be implemented.

Although detailed embodiments have been described, these only serve to provide a better understanding of the invention defined by the appended claims, and are not to be seen as limiting.

## Claims

1. A network entity (50) comprising a processing unit (52) that is configured:
- to receive (S10) a policy token from user equipment; **characterized in that** the policy token specifies a specific quality of service for a packet flow of a session for accessing a given content object to the user equipment, wherein the network entity is configured:
- to determine (S30) network equipment handling the packet flow to the user equipment;
- to generate (S40) an instruction to apply a specific policy for the packet flow to the user equipment based on the received policy token, wherein the instruction is generated to provide the specific quality of service for accessing the given content object;
and
- to send (S50) the instruction to the network equipment.

2. The network entity (50) of claim 1, wherein the processing unit (52) is configured to receive the policy token as a data object being part of a packet sent from the user equipment and/or to receive the policy token as a data object being part of a universal resource identifier sent from the user equipment.

3. The network entity (50) of claim 1 or 2, wherein the processing unit (52) is further configured to authenticate (S20) the received policy token and/or to decrypt (S20) the received policy token.

4. The network entity (50) of any one of claims 1 to 3,
wherein the policy token specifies at least one of the group including the packet flow, a content provided by the packet flow, an identification of a provider of the packet flow, a user information, information on a sender and/or a receiver of the content and/or packet flow, a policy token serial number, and a reference for charging cost.

5. The network entity (50) of any one of claims 1 to 4,
wherein the processing unit (52) is further configured to perform deep packet inspection for receiving the policy token.

6. The network entity (50) of any one of claims 1 to 5,
wherein the instruction is for reserving resources of the network equipment handling the packet flow to the user equipment according to the policy.

7. The network entity (50) of any one of claims 1 to 6,
wherein the instruction is for marking packets of the packet flow to the user equipment on the network equipment according to the policy.

8. The network entity (50) of any one of claims 1 to 7,
wherein the processing unit (52) is further configured to generate a charging data record from the policy token for charging a provider of the packet flow.

9. The network entity (50) of any one of claims 1 to 8,
wherein the network entity (50) is adapted as a part of a cellular telecommunications network.

10. The network entity (50) of any one of claims 1 to 9,
wherein the network entity (50) further comprises a memory unit (51) coupled to the processing unit (52) and a communication unit (53) adapted to receive the policy token and to send the instruction via a network (6).

11. A system, comprising a network entity (50) according to any of claims 1 to 10 and a processing entity (60) comprising a processing unit (62) that is configured to generate a policy token for being sent to and forwarded by user equipment, the policy token invoking network equipment handling a packet flow to the user equipment to apply a specific policy for the packet flow to the user equipment.

12. A method of operating a network entity (50) including the steps of:
- receiving (S10) a policy token from user equipment; **characterized in that** the policy token specifies a specific quality of service for the packet flow of a session for accessing a given content object to the user equipment, wherein the method comprises the further steps of:
- determining (S30) network equipment handling a packet flow to the user equipment;
- generating (S40) an instruction to apply a specific policy for the packet flow to the user equipment based on the received policy token, wherein the instruction is generated to provide the specific quality of service for accessing the given content object;
and
- sending (S50) the instruction to the network equipment.

13. The method of claim 12, adapted to implement a network entity (50) as defined in any of claims 2 to 10.

14. A method for policy control, **characterized by** the steps of
- generating, by a processing entity, a policy token specifying a specific quality of service for a packet flow of a session for accessing a given content object for being sent to and forwarded by a user equipment, the policy token invoking network equipment handling the packet flow to the user equipment to apply the specific policy for the packet flow to the user equipment,
- receiving (S10), by a network entity, the policy token from user equipment;
wherein the method comprises the further steps of:
- determining (S30), by the network entity, network equipment handling a packet flow to the user equipment;
- generating (S40), by the network entity, an instruction to apply a specific policy for the packet flow to the user equipment based on the received policy token, wherein the instruction is generated to provide the specific quality of service for accessing the given content object;
and
- sending (S50), by the network entity, the instruction to the network equipment.

15. A computer program loadable into a processing unit (52, 62) comprising code for executing all steps of the method according to any one of claims 12 to 14.

16. A computer program product comprising the computer program of claim 15.

## Patentansprüche

1. Netzinstanz (50), umfassend eine Verarbeitungseinheit (52), die konfiguriert ist zum:
- Empfangen (S10) eines Richtlinien-Tokens von Benutzereinrichtungen; **dadurch gekennzeichnet, dass** der Richtlinien-Token eine spezifische Dienstqualität für einen Paketfluss einer Sitzung zum Zugreifen auf ein bestimmtes Inhaltsobjekt für die Benutzereinrichtungen spezifiziert, wobei die Netzinstanz konfiguriert ist zum:
- Bestimmen (S30) von Netzeinrichtungen, die den Paketfluss zu den Benutzereinrichtungen bearbeiten;
- Generieren (S40) einer Anweisung zum Anwenden einer spezifischen Richtlinie für den Paketfluss zu den Benutzereinrichtungen basierend auf dem empfangenen Richtlinien-Token, wobei die Anweisung generiert wird, um die spezifische Dienstqualität zum Zugreifen auf das bestimmte Inhaltsobjekt bereitzustellen; und
- Senden (S50) der Anweisung an die Netzeinrichtungen.

2. Netzinstanz (50) nach Anspruch 1, wobei die Verarbeitungseinheit (52) so konfiguriert ist, dass sie den Richtlinien-Token als Datenobjekt empfängt, das Teil eines Pakets ist, das von den Benutzereinrichtungen gesendet wird, und/oder den Richtlinien-Token als Datenobjekt empfängt, das Teil einer URI (Universal Resource Identifier) ist, die von den Benutzereinrichtungen gesendet wird.

3. Netzinstanz (50) nach Anspruch 1 oder 2, wobei die Verarbeitungseinheit (52) ferner so konfiguriert ist, dass sie den empfangenen Richtlinien-Token authentifiziert (S20) und/oder den empfangenen Richtlinien-Token entschlüsselt (S20).

4. Netzinstanz (50) nach einem der Ansprüche 1 bis 3, wobei der Richtlinien-Token mindestens eines aus der der Gruppe spezifiziert, die den Paketfluss, einen Inhalt, der durch den Paketfluss bereitgestellt wird, eine Identifikation eines Anbieters des Paketflusses, eine Benutzerinformation, Informationen über einen Sender und/oder einen Empfänger des Inhalts und/oder Paketflusses, eine Seriennummer des Richtlinien-Tokens und eine Bezugnahme auf Verrechnungskosten umfasst.

5. Netzinstanz (50) nach einem der Ansprüche 1 bis 4, wobei die Verarbeitungseinheit (52) ferner so konfiguriert ist, dass sie eine gründliche Paketprüfung zum Empfangen des Richtlinien-Tokens durchführt.

6. Netzinstanz (50) nach einem der Ansprüche 1 bis 5, wobei die Anweisung zum Reservieren von Ressourcen der Netzeinrichtungen ist, die den Paketfluss zu den Benutzereinrichtungen gemäß der Richtlinie bearbeiten.

7. Netzinstanz (50) nach einem der Ansprüche 1 bis 6, wobei die Anweisung zum Markieren von Paketen des Paketflusses zu den Benutzereinrichtungen an den Netzeinrichtungen gemäß der Richtlinie ist.

8. Netzinstanz (50) nach einem der Ansprüche 1 bis 7, wobei die Verarbeitungseinheit (52) ferner so konfiguriert ist, dass sie einen Verrechnungsdatensatz aus dem Richtlinien-Tokens zur Verrechnung eines Anbieters des Paketflusses generiert.

9. Netzinstanz (50) nach einem der Ansprüche 1 bis 8, wobei die Netzinstanz (50) als Teil eines zellularen Telekommunikationsnetzes ausgelegt ist.

10. Netzinstanz (50) nach einem der Ansprüche 1 bis 9, wobei die Netzinstanz (50) ferner eine Speichereinheit (51), die mit der Verarbeitungseinheit (52) gekoppelt ist, und eine Kommunikationseinheit (53) umfasst, die so ausgelegt ist, dass sie den Richtlinien-Token empfängt und die Anweisung über das Netz (6) sendet.

11. System, umfassend eine Netzinstanz (50) nach einem der Ansprüche 1 bis 10 und eine Verarbeitungsinstanz (60), die eine Verarbeitungseinheit (62) umfasst, die so konfiguriert ist, dass sie einen Richtlinien-Token generiert, der an Benutzereinrichtungen gesendet und von diesen weitergeleitet werden soll, wobei der Richtlinien-Token Netzeinrichtungen aufruft, die einen Paketfluss zu den Benutzereinrichtungen bearbeiten, um eine spezifische Richtlinie für den Paketfluss zu den Benutzereinrichtungen anzuwenden.

12. Verfahren zum Betreiben einer Netzinstanz (50), umfassend die folgenden Schritte:
- Empfangen (S10) eines Richtlinien-Tokens von Benutzereinrichtungen; **dadurch gekennzeichnet, dass** der Richtlinien-Token eine spezifische Dienstqualität für den Paketfluss einer Sitzung zum Zugreifen auf ein bestimmtes Inhaltsobjekt für die Benutzereinrichtungen spezifiziert, wobei das Verfahren ferner die folgenden Schritte umfasst:
- Bestimmen (S30) von Netzeinrichtungen, die einen Paketfluss zu den Benutzereinrichtungen bearbeiten;
- Generieren (S40) einer Anweisung zum Anwenden einer spezifischen Richtlinie für den Paketfluss zu den Benutzereinrichtungen basierend auf dem empfangenen Richtlinien-Token, wobei die Anweisung generiert wird, um die spezifische Dienstqualität zum Zugreifen auf das bestimmte Inhaltsobjekt bereitzustellen; und
- Senden (S50) der Anweisung an die Netzeinrichtungen.

13. Verfahren nach Anspruch 12, das zum Implementieren einer Netzinstanz (50) nach einem der Ansprüche 2 bis 10 ausgelegt ist.

14. Verfahren zur Richtliniensteuerung, **gekennzeichnet durch** die folgenden Schritte:
- Generieren **durch** eine Verarbeitungsinstanz eines Richtlinien-Tokens, der eine spezifische Dienstqualität für einen Paketfluss zum Zugreifen auf ein bestimmtes Inhaltsobjekt spezifiziert und der an eine Benutzereinrichtung gesendet und von dieser weitergeleitet werden soll, wobei der Richtlinien-Token Netzeinrichtungen aufruft, die den Paketfluss zu den Benutzereinrichtungen bearbeiten, um die spezifische Richtlinie für den Paketfluss zu den Benutzereinrichtungen anzuwenden,
- Empfangen (S10) **durch** eine Netzinstanz des Richtlinien-Tokens von Benutzereinrichtungen;
wobei das Verfahren ferner die folgenden Schritte umfasst:
- Bestimmen (S30) **durch** die Netzinstanz von Netzeinrichtungen, die einen Paketfluss zu den Benutzereinrichtungen bearbeiten;
- Generieren (S40) **durch** die Netzinstanz einer Anweisung zum Anwenden einer spezifischen Richtlinie für den Paketfluss zu den Benutzereinrichtungen basierend auf dem empfangenen Richtlinien-Token, wobei die Anweisung generiert wird, um die spezifische Dienstqualität zum Zugreifen auf das bestimmte Inhaltsobjekt bereitzustellen; und
- Senden (S50) der Anweisung **durch** die Netzinstanz an die Netzeinrichtungen.

15. Computerprogrammprodukt, das in eine Verarbeitungseinheit (52, 62) geladen werden kann und Code zum Ausführen aller Schritte des Verfahrens nach einem der Ansprüche 12 bis 14 umfasst.

16. Computerprogrammprodukt, umfassend das Computerprogramm nach Anspruch 15.

## Revendications

1. Entité de réseau (50) comprenant une unité de traitement (52) qui est configurée pour effectuer :
- la réception (S10) d'un jeton pour ensemble de règles de gestion en provenance d'un équipement d'utilisateur ;
**caractérisée en ce que** le jeton pour ensemble de règles de gestion spécifie, à l'équipement d'utilisateur, une qualité de service spécifique pour un flux de paquets d'une session afin d'accéder à un objet de contenu donné,
dans laquelle l'entité de réseau est configurée pour effectuer :
- la détermination (S30) d'un équipement de réseau gérant le flux de paquets vers l'équipement d'utilisateur ;
- la génération (S40) d'une instruction pour appliquer un ensemble de règles de gestion spécifique pour le flux de paquets à l'équipement d'utilisateur sur la base du jeton pour ensemble de règles de gestion reçu, dans lequel l'instruction est générée pour fournir la qualité de service spécifique pour accéder à l'objet de contenu donné ; et
- l'envoi (S50) de l'instruction à l'équipement de réseau.

2. Entité de réseau (50) selon la revendication 1, dans laquelle l'unité de traitement (52) est configurée pour effectuer la réception du jeton pour ensemble de règles de gestion sous la forme d'un objet de données faisant partie d'un paquet envoyé depuis l'équipement d'utilisateur et/ou la réception du jeton pour ensemble de règles de gestion sous la forme d'un objet de données faisant partie d'un identifiant de ressource universel envoyé depuis l'équipement d'utilisateur.

3. Entité de réseau (50) selon la revendication 1 ou 2, dans laquelle l'unité de traitement (52) est en outre configurée pour effectuer l'authentification (S20) du jeton pour ensemble de règles de gestion reçu et/ou le décryptage (S20) du jeton pour ensemble de règles de gestion reçu.

4. Entité de réseau (50) selon l'une quelconque des revendications 1 à 3, dans laquelle le jeton pour ensemble de règles de gestion spécifie au moins l'un du groupe comprenant le flux de paquets, un contenu fourni par le flux de paquets, une identification d'un fournisseur du flux de paquets, des informations d'utilisateur, des informations sur un expéditeur et/ou un récepteur du contenu et/ou du flux de paquets, un numéro de série de jeton pour ensemble de règles de gestion, et une référence pour des frais de facturation.

5. Entité de réseau (50) selon l'une quelconque des revendications 1 à 4, dans laquelle l'unité de traitement (52) est en outre configurée pour effectuer une inspection approfondie des paquets pour la réception du jeton pour ensemble de règles de gestion.

6. Entité de réseau (50) selon l'une quelconque des revendications 1 à 5, dans laquelle l'instruction est destinée à la réservation de ressources de l'équipement de réseau gérant le flux de paquets vers l'équipement d'utilisateur en fonction de l'ensemble de règles de gestion.

7. Entité de réseau (50) selon l'une quelconque des revendications 1 à 6, dans laquelle l'instruction est destinée au marquage de paquets du flux de paquets vers l'équipement d'utilisateur sur l'équipement de réseau en fonction de l'ensemble de règles de gestion.

8. Entité de réseau (50) selon l'une quelconque des revendications 1 à 7, dans laquelle l'unité de traitement (52) est en outre configurée pour effectuer la génération d'un enregistrement de données de facturation à partir du jeton d'ensemble de règles de gestion pour la facturation d'un fournisseur du flux de paquets.

9. Entité de réseau (50) selon l'une quelconque des revendications 1 à 8, dans laquelle l'entité de réseau (50) est apte à faire partie d'un réseau de télécommunication cellulaire.

10. Entité de réseau (50) selon l'une quelconque des revendications 1 à 9, dans laquelle l'entité de réseau (50) comprend en outre une unité de mémoire (51) couplée à l'unité de traitement (52) et une unité de communication (53) apte à effectuer la réception du jeton pour ensemble de règles de gestion et l'envoi de l'instruction par l'intermédiaire d'un réseau (6).

11. Système, comprenant une entité de réseau (50) selon l'une quelconque des revendications 1 à 10 et une entité de traitement (60) comprenant une unité de traitement (62) qui est configurée pour effectuer la génération d'un jeton pour ensemble de règles de gestion à envoyer à et transférer par un équipement d'utilisateur, le jeton pour ensemble de règles de gestion demandant à un équipement de réseau gérant un flux de paquets vers l'équipement d'utilisateur d'effectuer l'application d'un ensemble de règles de gestion spécifique pour le flux de paquets vers l'équipement d'utilisateur.

12. Procédé de fonctionnement d'une entité de réseau (50) comprenant les étapes de :
- la réception (S10) d'un jeton pour ensemble de règles de gestion en provenance d'un équipement d'utilisateur ;
**caractérisé en ce que** le jeton pour ensemble de règles de gestion spécifie, à l'équipement d'utilisateur, une qualité de service spécifique pour un flux de paquets d'une session afin d'accéder à un objet de contenu donné, dans lequel le procédé comprend en outre les étapes de :
- la détermination (S30) d'un équipement de réseau gérant un flux de paquets vers l'équipement d'utilisateur ;
- la génération (S40) d'une instruction pour effectuer l'application d'un ensemble de règles de gestion spécifique pour le flux de paquets à l'équipement d'utilisateur sur la base du jeton pour ensemble de règles de gestion reçu, dans lequel l'instruction est générée pour fournir la qualité de service spécifique pour accéder à l'objet de contenu donné ; et
- l'envoi (S50) de l'instruction à l'équipement de réseau.

13. Procédé selon la revendication 12, apte à effectuer la mise en oeuvre d'une entité de réseau (50) selon l'une quelconque des revendications 2 à 10.

14. Procédé de commande d'ensemble de règles de gestion, **caractérisé par** les étapes de :
- la génération, par une entité de traitement, d'un jeton pour ensemble de règles de gestion spécifiant une qualité de service spécifique pour un flux de paquets d'une session afin d'accéder à un objet de contenu donné à envoyer à et transférer par un équipement d'utilisateur, le jeton pour ensemble de règles de gestion demandant à un équipement de réseau gérant le flux de paquets vers l'équipement d'utilisateur d'effectuer l'application de l'ensemble de règles de gestion spécifique pour le flux de paquets vers l'équipement d'utilisateur,
- la réception (S10), par une entité de réseau, du jeton pour ensemble de règles de gestion en provenance d'un équipement d'utilisateur ;
dans lequel le procédé comprend en outre les étapes de :
- la détermination (S30), par l'entité de réseau, d'un équipement de réseau gérant un flux de paquets vers l'équipement d'utilisateur ;
- la génération (S40), par l'entité de réseau, d'une instruction pour appliquer un ensemble de règles de gestion spécifique pour le flux de paquets à l'équipement d'utilisateur sur la base du jeton pour ensemble de règles de gestion reçu, dans lequel l'instruction est générée pour fournir la qualité de service spécifique pour accéder à l'objet de contenu donné ; et
- l'envoi (S50), par l'entité de réseau, de l'instruction à l'équipement de réseau.

15. Programme informatique chargeable dans une unité de traitement (52, 62) comprenant un code pour exécuter toutes les étapes du procédé selon l'une quelconque des revendications 12 à 14.

16. Produit de programme informatique comprenant le programme informatique selon la revendication 15.
